# EUROPEAN PATENT APPLICATION

(11) **EP 4 510 662 A1**
(43) Date of publication of application: **19.02.2025**
(21) Application number: 22937489.7
(22) Date of filing: 15.04.2022
(51) Int. Cl.: H04W 8/24, H04W 28/18

(54) **TERMINAL, WIRELESS COMMUNICATION METHOD, AND BASE STATION**

(71) Applicant: NTT DOCOMO, INC., Tokyo 100-6150 (JP)
(72) Inventor: HIGUCHI, Syouichi, Tokyo 100-6150 (JP); OHARA, Tomoya, Tokyo 100-6150 (JP); OKAMURA, Masaya, Tokyo 100-6150 (JP); NAKAMURA, Takuma, Tokyo 100-6150 (JP); SHIMA, Kousuke, Tokyo 100-6150 (JP)
(74) Representative: Hoffmann Eitle
(86) International application number: PCT/JP2022/017920
(87) International publication number: WO 2023/199512

(57) **Abstract**

A terminal according to one aspect of the present disclosure includes a transmitting section that transmits support information indicating a support for a specific reception function for interference mitigation in reception, and a control section that controls the reception by using the specific reception function. According to one aspect of the present disclosure, a function of receiver of the terminal can be appropriately used.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), a study is under way to advance a function of receiver of a terminal (user terminal, User Equipment (UE)).

However, in a case where a network does not recognize the function of receiver of the terminal, an appropriate resource/modulation scheme for transmission/reception is not determined, which may reduce communication throughput.

As such, an object of the present disclosure is to provide a terminal, a radio communication method, and a base station capable of appropriately using a function of receiver of the terminal.

### Solution to Problem

A terminal according to one aspect of the present disclosure includes a transmitting section that transmits support information indicating a support for a specific reception function for interference mitigation in reception, and a control section that controls the reception by using the specific reception function. Advantageous Effects of Invention

According to one aspect of the present disclosure, a function of receiver of the terminal can be appropriately used.

### Brief Description of Drawings

[FIG. 1] FIGS. 1A and 1B are diagrams to illustrate an example of association between an index/value and presence or absence of a receiver.
[FIG. 2] FIGS. 2A and 2B are diagrams to illustrate an example of association between an index and a receiver/reception function.
[FIG. 3] FIG. 3 is a diagram to illustrate an example of association between an index, a receiver, and a received quality.
[FIG. 4] FIG. 4 is a diagram to illustrate an example of table 1 for a CQI.
[FIG. 5] FIG. 5 is a diagram to illustrate an example of table 2 for a CQI.
[FIG. 6] FIG. 6 is a diagram to illustrate an example of table 3 for a CQI.
[FIG. 7] FIG. 7 is a diagram to illustrate an example of table 4 for a CQI.
[FIG. 8] FIG. 8 is a diagram to illustrate an example of a schematic structure of a radio communication system according to one embodiment.
[FIG. 9] FIG. 9 is a diagram to illustrate an example of a structure of a base station according to one embodiment.
[FIG. 10] FIG. 10 is a diagram to illustrate an example of a structure of a user terminal according to one embodiment.
[FIG. 11] FIG. 11 is a diagram to illustrate an example of a hardware structure of the base station and the user terminal according to one embodiment.
[FIG. 12] FIG. 12 is a diagram to illustrate an example of a vehicle according to one embodiment.

### Description of Embodiments

### (CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information related to a CSI report (report configuration information) and control the CSI report based on the report configuration information. The report configuration information may be, for example, "CSI-ReportConfig" of an information element (IE) of radio resource control (RRC). Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.
- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigld") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI report (SP-CSI) report.

The report quantity information may indicate at least one combination of the CSI parameters described above (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate a frequency granularity of a CSI report. The frequency granularity may include, for example, a wideband and a subband. The wideband is the entire CSI reporting band. The wideband may be, for example, an entire certain carrier (component carrier (CC), cell, serving cell), or an entire bandwidth part (BWP) in a certain carrier. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate which to report a PMI of the wideband or the subband (the frequency domain information may include, for example, "pmi-FormatIndicator" of an RRC IE used to determine a wideband PMI report or a subband PMI report). The UE may determine the frequency granularity of the CSI report (that is, either the wideband PMI report or subband PMI report), based on at least one of the report quantity information and the frequency domain information described above.

In a case where the wideband PMI report is configured (determined), one wideband PMI may be reported for the entire CSI reporting band. On the other hand, in a case where the subband PMI report is configured, a single wideband indication i1 may be reported for the entire CSI reporting band, and subband indication (one subband indication) i2 of each of one or more subbands (for example, subband indication of each subband) in the entire CSI report may be reported.

The UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

The CSI report may include one or more types of CSI in a space domain. For example, the CSI may include at least one of a first type (Type 1 CSI) used for single beam selection and a second type (Type 2 CSI) used for multi-beam selection. The single beam may be interpreted as a single layer, and the multi-beam may be interpreted as a plurality of beams. The Type 1 CSI may not assume multi-user multiple input multiple output (MIMO), and the Type 2 CSI may assume the multi-user MIMO.

The codebook may include a codebook for the Type 1 CSI (also referred to as a Type 1 codebook or the like) and a codebook for the Type 2 CSI (also referred to as a Type 2 codebook or the like). The Type 1 CSI may include Type 1 single panel CSI and Type 1 multi-panel CSI, for which respective different codebooks (Type 1 single panel codebook and Type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of Hybrid Automatic Repeat reQuest ACKnowledgement (HARQ-ACK), a scheduling request (SR), and CSI. The UCI may be carried on a PUCCH or on a PUSCH.

In Rel-15 NR, the UCI may include one CSI part for wideband PMI feedback. CSI report #n, if reported, includes PMI wideband information.

In Rel-15 NR, the UCI may include two CSI parts for subband PMI feedback. A CSI part 1 includes wideband PMI information. A CSI part 2 includes one wideband PMI information and multiple subband PMI information. The CSI part 1 and the CSI part 2 are encoded while being separated.

In Rel-15 NR, the UE is configured with report setting of N (N ≥ 1) CSI report configurations and resource setting of M (M ≥ 1) CSI resource configurations by a higher layer. For example, the CSI report configurations (CSI-ReportConfig) includes resource setting for channel measurement (resourcesForChannelMeasurement), CSI-IM resource setting for interference (csi-IM-ResourceForinterference), NZP-CSI-RS setting for interference (nzp-CSI-RS-ResourceForInterference), report quantity (reportQuantity), and the like. Each of the resource setting for channel measurement, the CSI-IM resource setting for interference, and the NZP-CSI-RS setting for interference is associated with the CSI resource configuration (CSI-ResourceConfig, CSI-ResourceConfigld). The CSI resource configuration includes a list of CSI-RS resource sets (csi-RS-ResourceSetList, for example, NZP-CSI-RS resource set or CSI-IM resource set).

### (Receiver)

For further enhancement in communication speed/capacity/reliability/latency performance and the like, future networks (NWs, for example, 6G) are assumed to use high frequencies and broad bandwidths compared to 5G. With such advancement in the NWs, enhancement in the terminal (UE) performance is also assumed. For example, as one method, advancement in a receiver included in the UE is conceivable.

For Rel. 17, various cases are assumed, and the following receivers are under study.
- Inter-cell Minimum Mean Square Error (MMSE)-Interference Rejection Combining (IRC) receiver: a receiver to suppress/remove an interference from another cell.
- Intra-cell inter-user MMSE-IRC receiver: a receiver to suppress/remove an interference from another user in the cell.

The MMSE-IRC receiver estimates an interference covariance matrix (an antenna weight matrix). This weight matrix creates a local minimum point (null) of antenna gain in an interference arrival direction.

Such an advanced receiver/function may not be notified from the UE to the NW. For example, a single user (SU)-multi-input multi-output (MIMO) interference mitigation advanced receiver introduced in Rel. 15 is an optional function without capability signaling (optional without capability signalling). This SU-MIMO interference mitigation advanced receiver is a receiver that performs reduced complexity maximum likelihood (R-ML) reception, with enhanced inter-stream interference suppression for SU-MIMO transmission. For this receiver, there is a capability with two reception (RX) antennas and rank 2, or a capability with four RX antennas and ranks 2, 3, and 4.

As described above, in a case where capability information related to an advanced receiver is not reported, the NW cannot appropriately perform control of the advanced receiver. The existing NW determines a resource allocation or an MCS based on a communication path state (CSI (at least one of PMI, RI, and CQI)) reported by the UE. However, the NW does not determine a resource allocation and an MCS, based on a receiver included in the terminal.

Because of a difference between a communication path state reported by the UE in advance and a communication path state in which the UE actually receives a signal, the NW may determine an inefficient resource allocation or improper MCS. For example, a case may be assumed in which the following steps 1 to 3 are performed.
[Step 1] The UE incapable of suppressing an interference from another cell reports, to the NW, CSI in an environment with less interferences from another cell.
[Step 2] The NW allocates a resource, based on this report.
[Step 3] The UE, in a case of moving to an environment with more interferences and receiving a signal, may not appropriately receive the signal and the allocated resource may be vain.

Thus, the inventors of the present invention came up with the idea of a control method for a receiver of a UE.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may refer to "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

### (Radio Communication Method)

In the embodiments, a specific receiver, an advanced receiver, a SU-MIMO interference mitigation advanced receiver a receiver with interference suppression, an MMSE-IRC receiver, an inter-cell MMSE-IRC receiver, a receiver having a specific reception function, a receiver AAA, a receiver XX, and a specific reception function may be interchangeably interpreted. In the embodiments, a specific reception function, an optional function, an optional function without capability signaling, a function that is not a mandatory function, and a reception function YY may be interchangeably interpreted.

In the embodiments, a normal receiver, a receiver that is not a specific receiver, a receiver of a mandatory function, a receiver having a normal reception function, and a normal reception function may be interchangeably interpreted. In the embodiments, a normal reception function and a mandatory function may be interchangeably interpreted.

In the embodiments, a specific UE, a UE including a specific receiver, and a UE supporting a specific reception function may be interchangeably interpreted. In the embodiments, a normal UE, a UE including a normal receiver, a UE supporting a normal reception function, a UE not including a specific receiver, and a UE not supporting a specific reception function may be interchangeably interpreted.

In the embodiments, a parameter for modulation/encoding, a modulation scheme, a modulation order, a code rate, efficiency, and a transport block size may be interchangeably interpreted.

### <First Embodiment>

This embodiment relates to notification/reporting of a support for a specific receiver/specific reception function.

A UE may notify/report, to an NW, information (support information) indicating that the UE includes a specific receiver/specific reception function.

In the support information, whether the UE includes a specific receiver may correspond to values of 0 and 1.

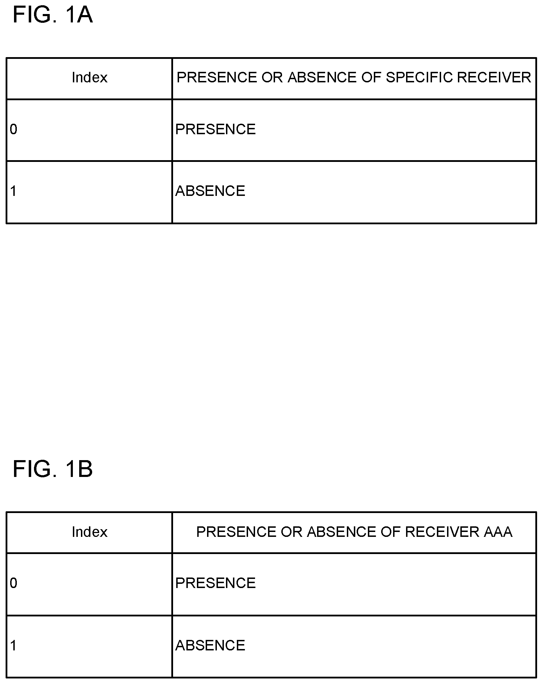

In an example of FIG. 1A, the support information includes a value (an index) of 0 or 1. The value of 0 in the support information may indicate that the UE includes a specific receiver (presence), and the value of 1 in the support information my indicate that the UE does not include a specific receiver (absence). The meanings of the values of 0 and 1 may be opposite to those in this example.

The NW may notify the UE in advance of information (receiver configuration information) to configure/indicate a kind of a specific receiver to be reported. The UE may notify the NW of information (support information) indicating whether the UE includes the specific receiver indicated in the receiver configuration information. Contents of the receiver configuration information may be different depending on the base station (may be cell-specific), or may be different depending on the UE (may be UE-dedicated (UE-specific)).

In an example of FIG. 1B, the receiver configuration information indicates that the specific receiver is a receiver AAA. The support information includes a value (an index) of 0 or 1. The value of 0 in the support information may indicate that the UE includes the receiver AAA (presence), and the value of 1 in the support information may indicate that the UE does not include the receiver AAA (absence). The meanings of the values of 0 and 1 may be opposite to those in this example.

According to this embodiment, the NW can recognize whether the UE includes the specific receiver.

### <Second Embodiment>

This embodiment relates to notification/reporting of a kind of a specific receiver/specific reception function.

A UE may notify/report, to an NW, information (receiver support information) related to a specific receiver/specific reception function supported by (included in) the UE. The receiver support information may indicate a name/kind/function of a receiver. For example, the specific reception function may be a high tolerance of an interference compared to a normal reception function, mitigating/suppressing an interference, or the like.

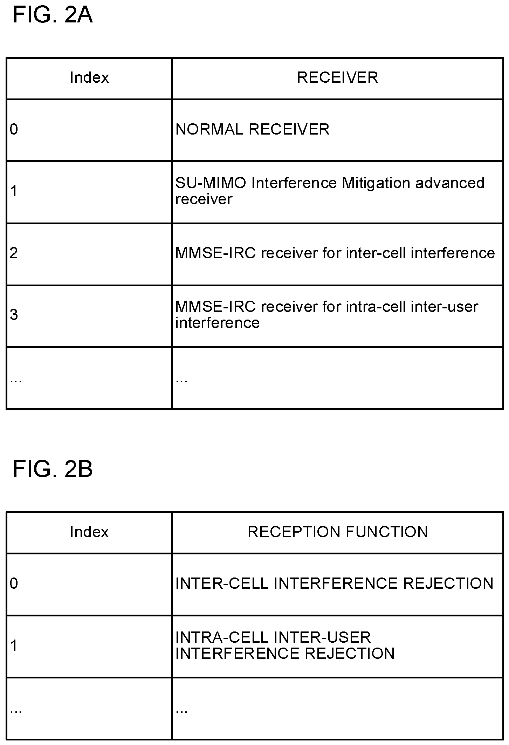

Each kind of a receiver may be associated with (given) a value of an index (a receiver number). As the receiver support information, a value of an index corresponding to a receiver of the UE may be notified. In an example of FIG. 2A, index values of 0, 1, 2, 3, ... of the receiver support information may be associated with different kinds of receivers. The index values of 0, 1, 2, and 3 of the receiver support information may correspond to a normal receiver, an SU-MIMO interference mitigation advanced receiver, an MMSE-IRC receiver for inter-cell interference, and an MMSE-IRC receiver for intra-cell inter-user interference, respectively.

The receiver support information may be a bitmap. Each bit (bit location) in the bitmap may correspond to a kind of a receiver. Values of 0 and 1 of each bit may correspond to whether the UE includes a corresponding kind of receiver. The value of 1 of each bit may indicate that the UE includes the corresponding receiver (presence), and the value of 0 of each bit may indicate that the UE does not include the corresponding receiver (absence). The meanings of the values of 0 and 1 may be opposite to those in this example. The number of kinds of receivers included in the UE (the number of values of 1 in the bitmap) may be one or plural.

Each specific reception function of a specific receiver may be associated with (given) a value of an index (a function number). As the receiver support information, a value of an index corresponding to a function of receiver of the UE may be notified. In an example of FIG. 2B, index values of 0, 1, ... of the receiver support information may be associated with different kinds of receivers. The index values of 0 and 1 of the receiver support information may correspond to a normal receiver, inter-cell interference rejection, and intra-cell inter-user interference rejection, respectively.

The receiver support information may be a bitmap. Each bit in the bitmap may correspond to a function of a receiver. Values of 0 and 1 of each bit may correspond to whether the UE has a corresponding function. The value of 1 of each bit may indicate that the UE has the corresponding function (presence), and the value of 0 of each bit may indicate that the UE does not have the corresponding function (absence). The meanings of the values of 0 and 1 may be opposite to those in this example. The number of functions of a receiver included in the UE (the number of values of 1 in the bitmap) may be one or plural.

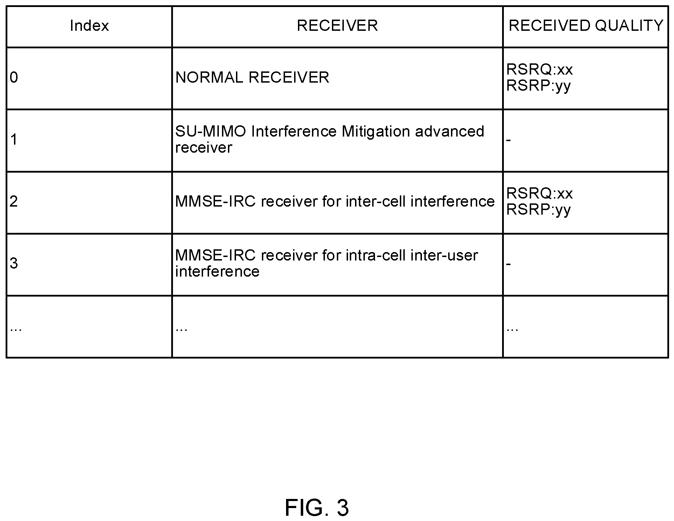

The UE may notify the NW of information (received quality information) of received quality (such as RSRP/RSRQ/SINR) corresponding to a kind of a receiver supported. The UE may notify the NW of the receiver support information (index) and the received quality information. The received quality information may be associated with a specific value of an index of the receiver support information. The UE, in a case of reporting the receiver support information of the specific value, may notify of corresponding received quality information. In an example of FIG. 3, index values of 0 and 2 of the receiver support information are each associated with RSRQ and RSRP which are the received quality information. The UE, in a case of reporting the index value of 0 or 2 of the receiver support information, may notify of an RSRQ value of xx and an RSRP value of yy as the received quality information.

According to this embodiment, the NW can recognize a kind/function of a receiver of the UE.

### <Third Embodiment>

This embodiment relates to a CSI report.

A UE may determine/change a format/parameter (CSI parameter) of a CSI (communication path state) report depending on a kind of a receiver the UE supports. The CSI parameter to be reported may include at least one of PMI, RI, CQI, and CRI.

An NW may notify the UE in advance of information (report configuration information, configuration) configuring/indicating a format/parameter to be reported. The UE may determine CSI based on the format indicated in the report configuration information and a measurement result, and report/notify the CSI to the NW. Contents of the report configuration information may be different depending on the base station (may be cell-specific), or may be different depending on the UE (may be UE-dedicated (UE-specific)).

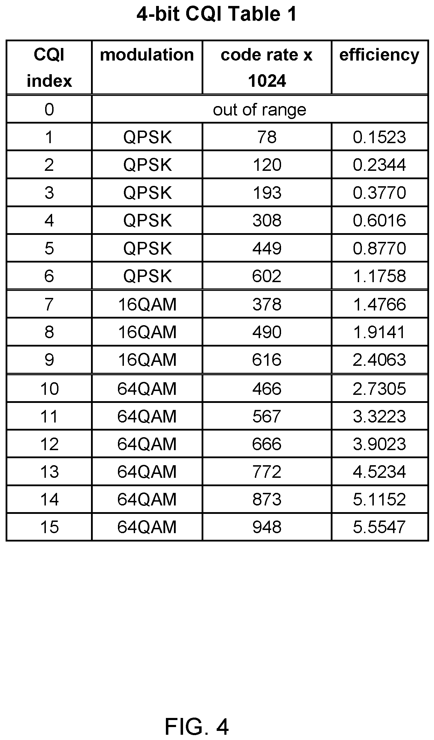

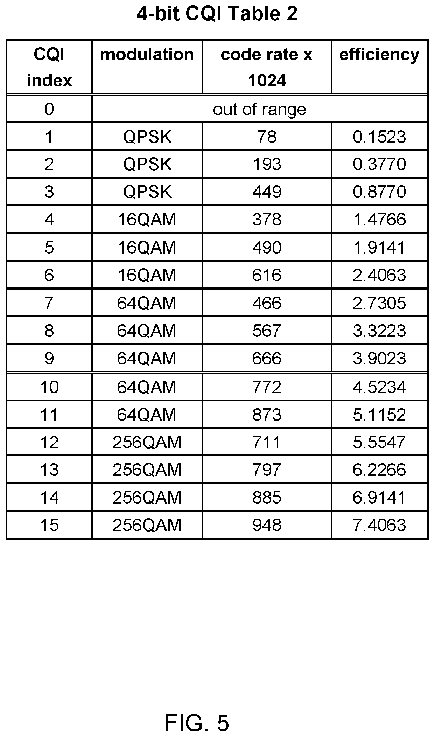

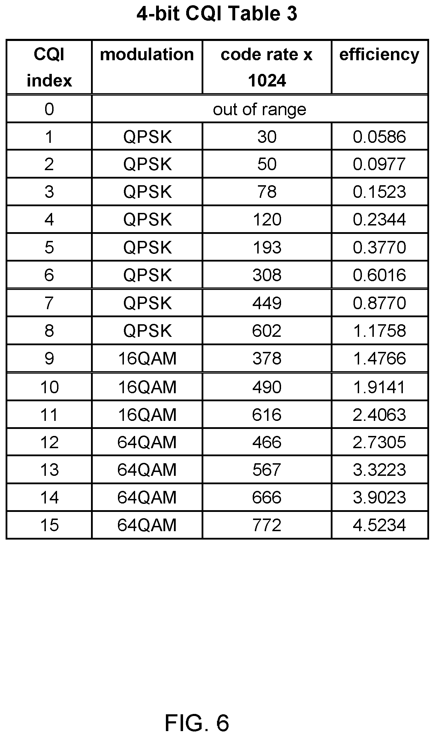

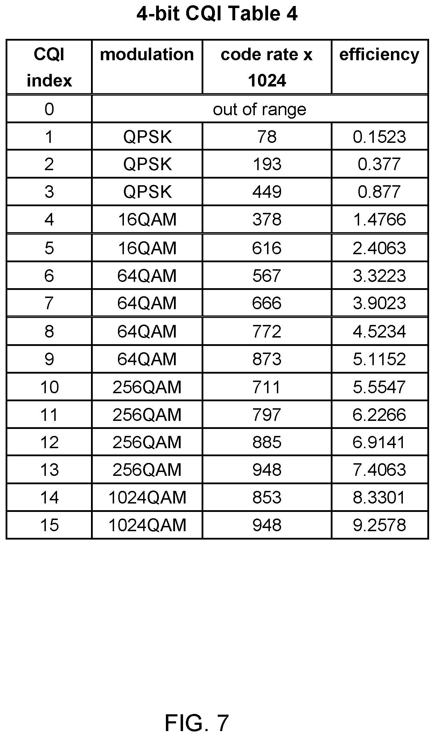

For reporting of a CQI based on QPSK, 16QAM, 64QAM (up to 64QAM), a CQI index and its interpretation may be given by table 1 (FIG. 4) or table 3 (FIG. 6). For reporting of a CQI based on QPSK, 16QAM, 64QAM, 256QAM (up to 256QAM), a CQI index and its interpretation may be given by table 2 (FIG. 5). For reporting of a CQI based on QPSK, 16QAM, 64QAM, 256QAM, 1024QAM (up to 1024QAM), a CQI index and its interpretation may be given by table 4 (FIG. 7). Each of tables 1 to 4 illustrates association of a modulation scheme, a code rate, and efficiency with a CQI index.

The UE may derive the highest CQI index satisfying the following condition for each CQI value reported in an uplink slot n.
[Condition] A single PDSCH transport block occupying a group of downlink physical resource blocks referred to as a CSI reference resource with a combination of a modulation scheme, a target code rate, and a transport block size that are corresponding to the CQI index is received with a transport block error probability (block error rate (BLER)) not exceeding the following threshold a or b.
[[Threshold a]] 0.1 in a case where a higher layer parameter (cqi-Table in CSI-ReportConfig) configures table 1 or 2 or 4.
[[Threshold b]] 0.00001 in a case where the higher layer parameter (cqi-Table in CSI-ReportConfig) configures table 3 (high reliability).

In a case where the following cases a and b and c are satisfied, a combination of a modulation scheme and a transport block size may correspond to the CQI index.
[Case a] A case where the combination for transmission on a PDSCH in a CSI reference resource may be notified, in accordance with determination of a transport block size described in a specification.
[Case b] A case where a modulation scheme is indicated by the CQI index.
[Case c] A case where an effective channel code rate the closest to a code rate indicated by the CQI index is obtained in a case where the combination of a transport block size and a modulation scheme is applied to the reference resource. If an effective channel code rate substantially equal to the code rate indicated by the CQI index is obtained by more than one combinations of a transport block size and a modulation scheme, only a combination with the smallest transport block size among that is associated.

For a CQI reported by a normal UE/specific UE, a CQI index and its interpretation (a table used for CQI calculation) may be in accordance with an existing table (an existing format/parameter). The existing table may be at least one of tables 1 to 4.

Besides tables 1 to 4, a specific table in consideration of a specific receiver may be defined in a specification. The specific table may include at least one of the following tables XX and YY.
[Table XX] A table used by the UE supporting a specific receiver XX.
[Table YY] A table used by the UE supporting a function YY a specific receiver has.

For a CQI reported by a specific UE, a CQI index and its interpretation (a table used for CQI calculation) may be in accordance with a new table (a new format/parameter).

The specific UE may be configured with a specific table out of the existing table and the new table. The specific table may include a modulation order/efficiency higher than a specific value. The specific table may include at least one of table XX, table YY, and table 4. Only the UE having transmitted a notification indicating the specific receiver/specific reception function may be configured with the specific table. The normal UE may be defined not to assume to be configured with the specific table. The UE having not transmitted the notification indicating the specific receiver/specific reception function may be defined not to assume to be configured with the specific table.

The specific UE may be configured with a report of the specific format/parameter. The specific table may include a parameter corresponding to the modulation order/efficiency higher than the specific value. Only the UE having transmitted the notification indicating the specific receiver/specific reception function may be configured with the report of the specific format/parameter. The normal UE may be defined not to assume to be configured with the report of the specific format/parameter. The UE having not transmitted the notification indicating the specific receiver/specific reception function may be defined not to assume to be configured with the report of the specific format/parameter.

According to this embodiment, the UE can report appropriate CSI.

### <Fourth Embodiment>

This embodiment relates to the resource allocation.

The NW may perform/control the resource allocation, based on the information (support information/receiver support information/CSI) notified from the UE in at least one the first to third embodiments. The resource may be a downlink (for example, PDSCH) resource, or an uplink (for example, PUSCH) resource. The resource allocation may be at least one of time domain resource allocation and frequency domain resource allocation.

The NW may perform the resource allocation, based on the information notified according to the first or second embodiment and the CSI report having an existing format. For example, the UE may allocate a resource, to the UE including a specific receiver, based on a CSI report or based on a condition better than the CSI report (assuming a received quality higher than a reported received quality). For example, the UE may allocate a resource, to the UE not including a specific receiver, based on a CSI report or based on a condition worse than the CSI report (assuming a received quality lower than a reported received quality).

The NW may perform the resource allocation, based on the information notified according to the first or second embodiment and the CSI report having the new format/parameter according to the third embodiment. For example, the UE may allocate a resource, to the UE including a specific receiver, based on a CSI report.

The specific UE may receive resource allocation information (indication/configuration) involving a parameter higher than a specific value with respect to modulation/encoding. The parameter being higher than the specific value may include at least one of that a modulation order is higher than a specific modulation order and that a code rate is higher than a specific code rate. Only the UE having transmitted a notification indicating the specific receiver/specific reception function may receive the resource allocation information involving the parameter higher than the specific value. The normal UE may be defined not to assume to receive the resource allocation information involving the parameter higher than the specific value. The UE having not transmitted the notification indicating the specific receiver/specific reception function may be defined not to assume to receive the resource allocation information involving the parameter higher than the specific value.

The NW may recognize/grasp the number of UEs (normal UEs) each including a normal receiver and the number of UEs (specific UEs) each including a specific receiver in a cell, based on the information notified according to the first or second embodiment. Based on the number of normal UEs and the number of specific UEs, the NW may increase efficiency of the resource allocation in a cell of the NW (serving cell) and a neighboring cell in order to perform at least one of the following operations 1 and 2. The NW may indicate handover to the UE even in a case where a received quality does not satisfy a threshold for handover, in order to perform at least one of the following operations 1 and 2. The specific UE is likely to be capable of communication by using a modulation order higher than a modulation order used by the normal UE. In this case, in a case where the specific UE transmits/receives the same amount of data as the normal UE, resources less than that for the normal UE are enough to be used.

[Operation 1] The NW matches (approximates) the number of normal UEs present in the cell of the NW and the neighboring cell to the number of specific UEs present in the cell of the NW and the neighboring cell.

[Operation 2] The NW, in consideration of states of the cell of the NW and the neighboring cell (a propagation environment, a frequency, or the like), assigns the specific UE to a worse state (a worse propagation environment, a frequency with more interferences) and assigns the normal UE to a better state (a better propagation environment, a frequency with less interferences). The NW may recognize/grasp the state, based on the received quality report according to the second embodiment and other reports (measurement reports).

According to this embodiment, the NW can appropriately allocate a resource, improving resource use efficiency.

### <Supplement>

### <<Variations>>

The NW may configure/indicate enabling/disabling of the function in at least one of the first to third embodiments.

The report from the UE to the NW in at least one of the first to third embodiments may be periodic. A periodicity of the report may be different between a specific UE and a normal UE. For example, since the specific UE is tolerant of change in a communication environment, the periodicity of the report of the specific UE may be longer than the periodicity of the report of the normal UE.

The time domain resource allocation may be notified by using an existing time domain resource allocation (TDRA). A new TDRA for the specific UE may be introduced (may be defined in a specification). The time domain resource allocation for the specific UE may be notified by using the new TDRA.

DCI/MAC CE/RRC signaling may be used for the notification from the NW to the UE in at least one of the first to fourth embodiments.

The report from the UE to the NW in at least one of the first and second embodiments may be reported together with an existing report from the UE to the NW (in a PUCCH/PUSCH including the existing report).

### <<UE Capability Information/Higher Layer Parameter>>

At least one of the above-described embodiments may be applied only to a UE that has reported a specific UE capability or that supports the specific UE capability.

The specific UE capability may indicate at least one of the following:
- Supporting processing/operation/control/information for at least one of the above-described embodiments.

The specific UE capability described above may be a capability applied across all frequencies (commonly regardless of the frequency), a capability per frequency (for example, a cell, a band, a BWP), a capability per frequency range (for example, Frequency Range 1 (FR1), FR2, FR3, FR4, FR5, FR2-1, FR2-2), or a capability per subcarrier spacing (SCS).

The specific UE capability described above may be a capability applied across a full duplex mode (commonly regardless of duplex mode), or a capability per duplex mode (for example, time division duplex (TDD), frequency division duplex (FDD)).

At least one of the above-described embodiments may be applied to a case where the UE is configured with specific information associated with the above-described embodiments by higher layer signaling. For example, the specific information may be information indicating enabling of at least one function in the embodiments described above, any RRC parameter for a specific release (for example, Rel. 18), or the like.

In a case where the UE does not support at least one of the specific UE capabilities described above or is not configured with the specific information, the UE may apply, for example, Rel-15/16 operation.

According to the UE capabilities/higher layer parameters described above, the UE can achieve the functions described above while maintaining compatibility with the existing specifications.

### (Supplementary Note)

The following inventions are supplemented for one embodiment of the present disclosure.

### [Supplementary Note 1]

A terminal including
a transmitting section that transmits support information indicating a support for a specific reception function for interference mitigation in reception; and
a control section that controls the reception by using the specific reception function.

### [Supplementary Note 2]

The terminal according to supplementary note 1, wherein the support information indicates the support for the specific reception function by using an index or a bit location corresponding to the specific reception function.

### [Supplementary Note 3]

The terminal according to supplementary note 1 or 2, wherein the control section determines channel state information (CSI), based on a configuration corresponding to the specific reception function and a measurement result.

### [Supplementary Note 4]

The terminal according to any one of supplementary notes 1 to 3, wherein the control section controls reception of resource allocation information involving a parameter higher than a specific value with respect to modulation or encoding.

### (Radio Communication System)

Hereinafter, a structure of a radio communication system according to one embodiment of the present disclosure will be described. In this radio communication system, any of the radio communication methods according to the embodiments of the present disclosure described above may be used alone or may be used in combination for communication.

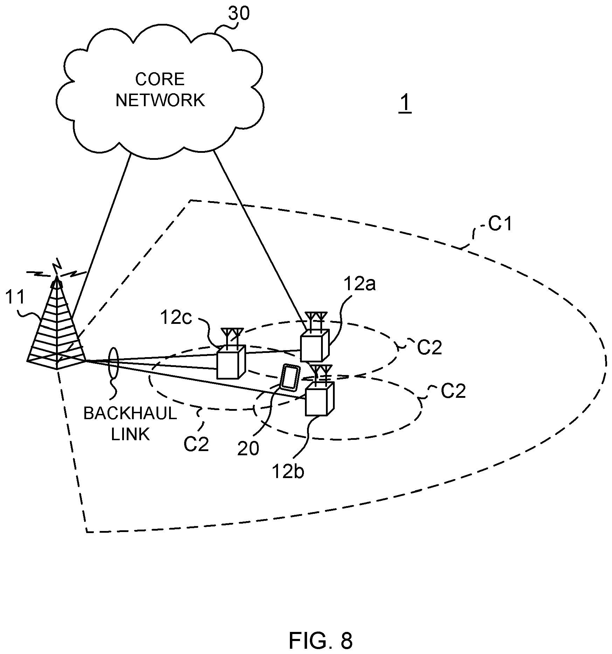

FIG. 8 is a diagram to illustrate an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect illustrated in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based radio access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The radio access scheme may be referred to as a "waveform." Note that, in the radio communication system 1, another radio access scheme (for example, another single carrier transmission scheme, another multi-carrier transmission scheme) may be used for a radio access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

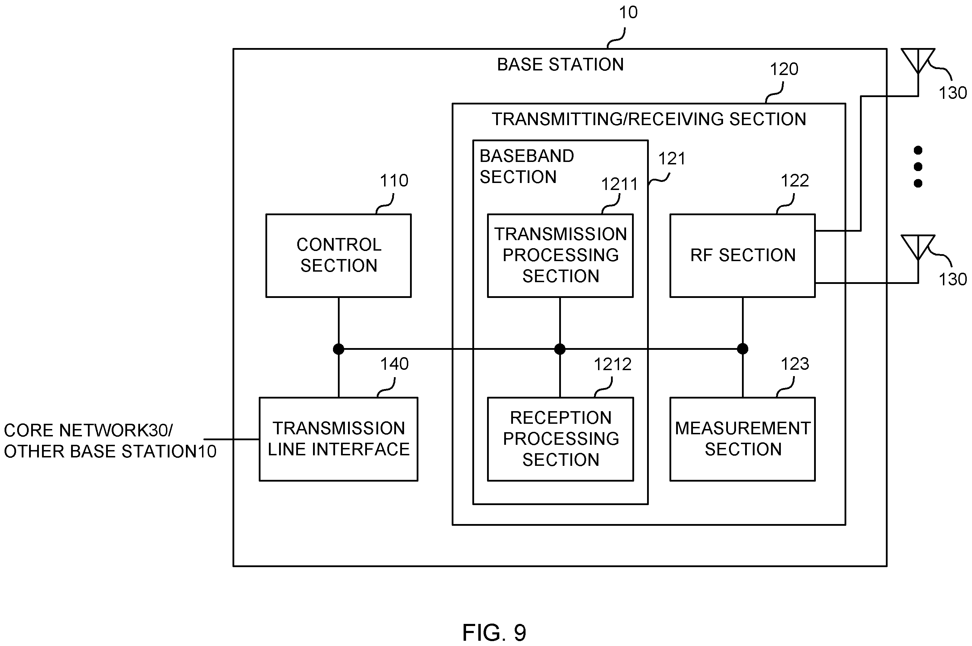

FIG. 9 is a diagram to illustrate an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily illustrates functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211 and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive support information indicating that a terminal supports a specific reception function for interference mitigation.

The control section 110 may control transmission, based on the specific reception function.

### (User Terminal)

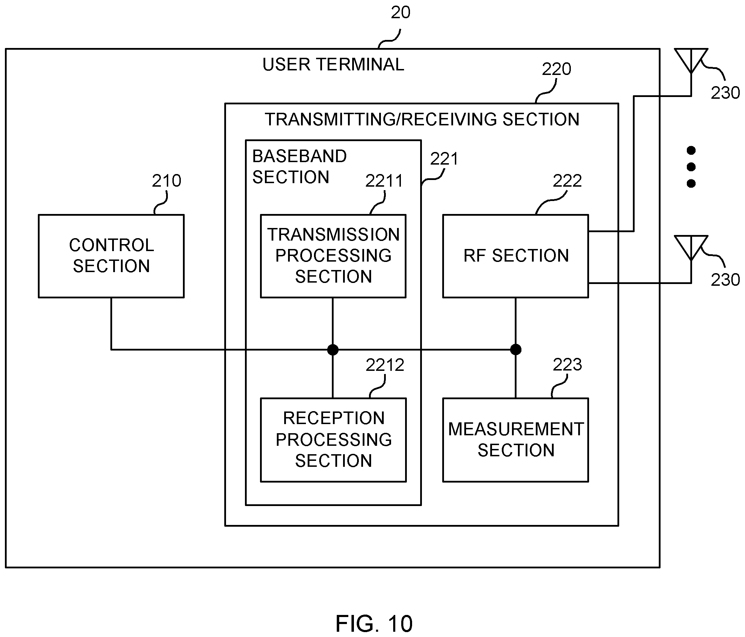

FIG. 10 is a diagram to illustrate an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily illustrates functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data, control information, and the like acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may transmit support information indicating a support for a specific reception function for interference mitigation in reception.

The control section 210 may control the reception by using the specific reception function.

The support information may indicate the support for the specific reception function by using an index or a bit location corresponding to the specific reception function.

The control section 210 may determine channel state information (CSI), based on a configuration corresponding to the specific reception function and a measurement result.

The control section 210 may control reception of resource allocation information involving a parameter higher than a specific value with respect to modulation or encoding.

### (Hardware Structure)

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

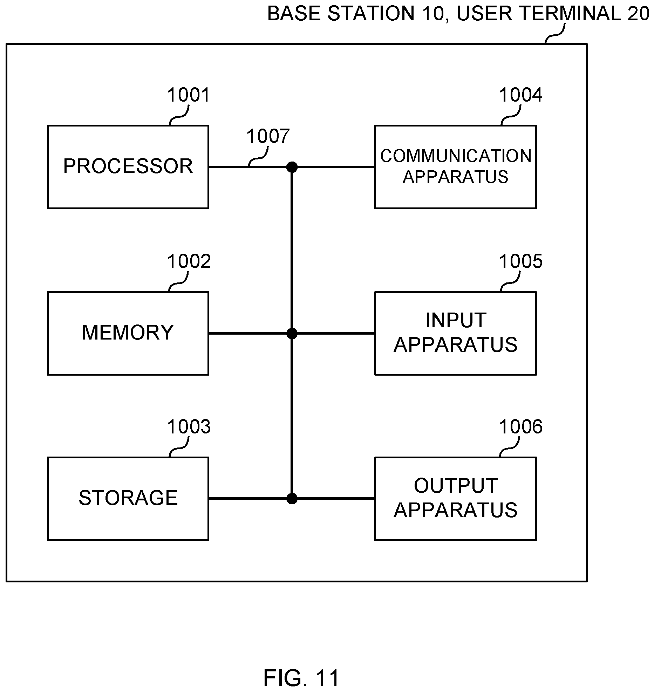

For example, a base station, a user terminal, and so on according to one embodiment of the present disclosure may function as a computer that executes the processes of the radio communication method of the present disclosure. FIG. 11 is a diagram to illustrate an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses illustrated in the drawings, or may be configured not to include part of apparatuses.

For example, although only one processor 1001 is illustrated, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTls is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. Since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, "a base station transmits information to a terminal" may be interchangeably interpreted as "the base station indicates control/operation based on the information to the terminal."

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

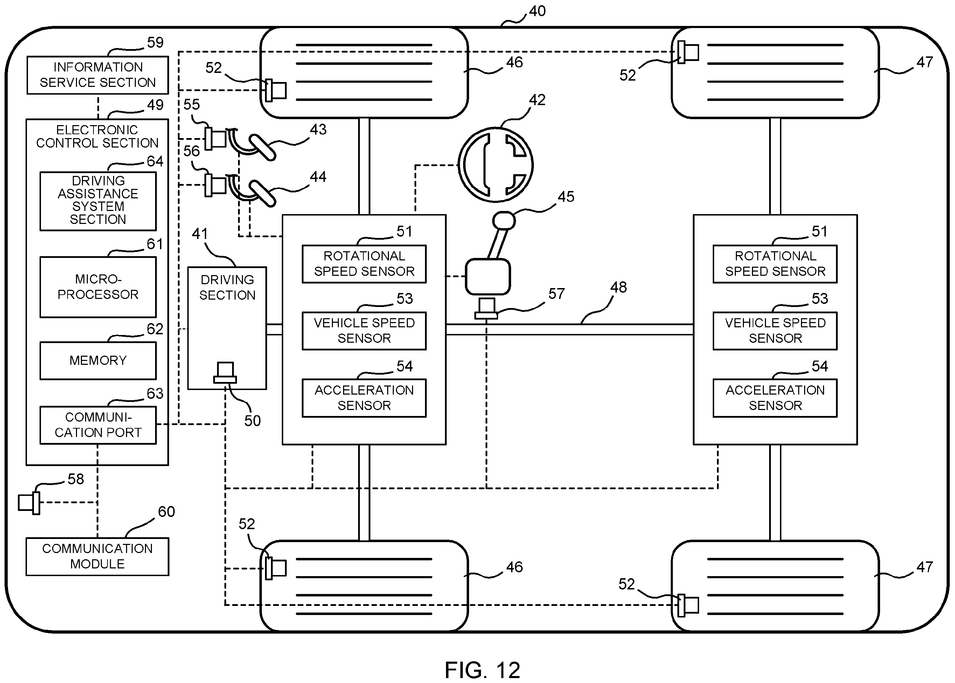

FIG. 12 is a diagram to illustrate an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various information such as drive information, traffic information, and entertainment information, such as a car navigation system, an audio system, a speaker, a display, a television, and a radio, and one or more ECUs that control these devices. The information service section 59 provides various information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an Al processor, and one or more ECUs that control these devices. The driving assistance system section 64 transmits and receives various information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various information (traffic information, signal information, inter-vehicle distance information, and the like) transmitted from the external apparatus, and displays the various information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various information received from the external apparatus in the memory 62 that can be used by the microprocessor 61. Based on the information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG, where x is, for example, an integer or a decimal), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or less than," "less than," "more than," "equal to," and the like may be interchangeably interpreted. In the present disclosure, the words meaning "good," "bad," "large", "small," "high," "low," "early," "late," "wide," "narrow," and the like may be interchangeably interpreted (without distinction of positive, comparative, superlative). In the present disclosure, the words meaning "good," "bad," "large," "small," "high," "low," "early," "late," "wide," "narrow," and the like may be interchangeably interpreted as expressions of those with "ith" (i represents any integer) prefixed (without distinction of positive, comparative, superlative) (for example, "highest" may be interchangeably interpreted as "ith highest").

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a transmitting section that transmits support information indicating a support for a specific reception function for interference mitigation in reception; and
a control section that controls the reception by using the specific reception function.

2. The terminal according to claim 1, wherein
the support information indicates the support for the specific reception function by using an index or a bit location corresponding to the specific reception function.

3. The terminal according to claim 1, wherein
the control section determines channel state information (CSI), based on a configuration corresponding to the specific reception function and a measurement result.

4. The terminal according to claim 1, wherein
the control section controls reception of resource allocation information involving a parameter higher than a specific value with respect to modulation or encoding.

5. A radio communication method for a terminal, the radio communication method comprising:
transmitting support information indicating a support for a specific reception function for interference mitigation in reception; and
controlling the reception by using the specific reception function.

6. A base station comprising:
a receiving section that receives support information indicating that a terminal supports a specific reception function for interference mitigation; and
a control section that controls transmission, based on the specific reception function.
